# EUROPEAN PATENT APPLICATION

(11) **EP 1 001 622 A2**
(43) Date of publication of application: **17.05.2000**
(21) Application number: 99308663.6
(22) Date of filing: 02.11.1999
(51) Int. Cl.: H04N 5/775, G11B 15/02

(54) **Recording scheduler for a video recording device**

(30) Priority: 09.11.1998 JP 31759398
(71) Applicant: SONY CORPORATION, Tokyo 141 (JP)
(72) Inventor: Sato, Masahiko, c/o Sony Corporation, Tokyo (JP); Sugo, Megumi, c/o Sony Corporation, Tokyo (JP)
(74) Representative: Robinson, Nigel Alexander Julian

(57) **Abstract**

A video recording device capable of setting the priority for recording a broadcast program received by a television receiver wherein the video recording device contains a controller capable of scheduling the recording of a program, and when the recording priority has been set, this controller stops the video recording currently being performed by way of the control section of the video recorder and afterwards performs recording of the scheduled television broadcast program received on the television receiver.

## Description

The present invention relates to a video recording device and relates in particular to a video recording device for television broadcast signals.

Currently most video recording devices for broadcast television signals are comprised of a receiving device for the television broadcast signals, and a video tape recorder. Almost all of these video recording devices have a video record scheduling function.

This video record scheduling function may for instance be a time scheduling method. In this method, the user selects the desired program for recording from a television program schedule and then enters the broadcast channel for that program, broadcast date, broadcast start time and broadcast end time for that program and video recording (or dubbing) is then performed according to this information entered by the user.

However, in this time scheduling method, a somewhat large amount of scheduling information must be entered correctly and in sequence. This method has the drawback that if even one mistake is made in entering this scheduled information then the video recording (or dubbing) will not be performed correctly and making this method troublesome for the user.

In order to resolve this problem, the barcode method was developed. In the barcode method, schedule information in a barcode format corresponding to each program is listed in the program schedule. This program barcode schedule information is read by a barcode reader connected to the video recording device and video recording of the desired program is then scheduled.

However, this barcode scheduling method has the problem that barcodes corresponding to all programs must be listed in the broadcast program schedule. This barcode information occupied a large amount of space in the broadcast program schedule and therefore cannot be used in media with a limited amount of space such as the program schedule boxes in newspapers, etc.

As one method to avoid these problems, the G code scheduling method is gradually coming into use. In the G code scheduling method, the program scheduling information is encoded into less than eight numbers by means of a custom calculation method. This code is entered into a G code custom remote control device and video recording of the desired program is then scheduled.

However, the G code scheduling method has the problem of essentially consisting of a time scheduling so that this method cannot respond if the broadcast program start times or end times are changed due to a change in the station broadcasting schedule. When a baseball game broadcast is extended, then the broadcast of subsequent programs will be delayed or aborted and the video recording device using the above scheduling methods will start video recording at the scheduled time regardless of the program contents. The problem then occurs that the program desired by the user could not be recorded or only the end portion was recorded.

A method in the known art is disclosed in Japanese Patent Laid-Open No. Hei 4-284080 for handling changes in broadcast times by overlapping a corresponding G code signal (for example a signal equivalent to a G code) into the broadcast program to schedule the program for recording. The scheduling code signal is compared with the code signal within the broadcast program, from the scheduled program time onwards and video recording (or dubbing) commences if the two code signals are a match. No video recording is performed if the code signals are different from each other.

In cable television (CATV) and multichannel television on the other hand, easily finding the desired program is difficult because of the large number of channels and programs. In such cases, a method is employed in which a selection screen called an electronic program guide is displayed and the program selected and scheduled for recording from that electronic program guide. A large general list of broadcast genres such as news, movies, and drama are displayed on this electronic program guide and functions like search and record scheduling can be performed.

However, the recording device can utilize a plurality of the above scheduling methods to schedule a video recording. For instance, record scheduling methods such as the above electronic program guide and the G code scheduling methods can be separately selected. In this case, since the record scheduling method can be used independently of each other, the problem occurs that the scheduled recording times may overlap on certain occasions. Also, even if the scheduled recording times do not overlap onto each other, the problem may occur that the broadcast start time of one program may be delayed and record method may try to correct for the delay with the result that the scheduled recording times may overlap on each other. Consequently, attempting to schedule video recording with these methods creates the problem of overlapping or mutually interfering recording times.

In an attempt to deal with interfering or overlapping of scheduled program recording times, a method was disclosed in the known art, in Japanese Patent Laid-Open No. Hei 9-128839 for establishing an order of priority for record scheduling methods and then recording (or dubbing) the program scheduled with the higher priority scheduling method.

However, the above methods of the known art all gave priority to the recording start time, thus causing a problem to occur. For instance, when a video recording device had both an internal receiving means for television broadcast signals and a signal input means for signals from an external receiver, when the signal from the internal receiving means was already being recorded in the video tape recorder, the program currently being recorded (or dubbed) had priority so that even if a command to record another program was subsequently input from the external receiving means, that command was not accepted.

Thus a problem exists in that when a video recording device of the prior art has a plurality of scheduling means (methods) and a plurality of audio/visual signal input means, when an audiovisual signal is being recorded (dubbed) from one of these input means, recording of the other input means is not allowed.

In order to address the above mentioned problems with the conventional art, this invention utilizes a relative simple method to provide a video recording device capable of assigning priority to the audiovisual signal from the input means having priority rights and recording that audiovisual signal even when an audiovisual signal is currently being recorded from the other input means.

In order to address the above described problem, this invention provides a video recording device characterised in having audiovisual signal recording equipment containing a first receiving means to receive television broadcast signals, an audiovisual signal input means to input audiovisual signals from an external source, a selection means to select and output either an audiovisual signal of a television broadcast signal received by the first receiving means and an audiovisual signal input from the audiovisual signal input means, a recording means to record the output of the selection means, a first control means to control the selection by the selection means and the recording by the recording means and, a receiver comprising a second receiving means to receive the television broadcast signal, an audiovisual signal output means to output the audiovisual signal from the television broadcast signal to the audiovisual signal input means, a scheduling means for the television broadcast signal to receive the second receiving means, and a second control means to control the recording means for the audiovisual signal of the television broadcast program scheduled with the scheduling means by way of reception of the second receiving means of the television broadcast program scheduled for recording with the scheduling means and output from the audiovisual signal output means of the audiovisual signal of that television broadcast program and the video recording device is characterized in that the audiovisual signal recording device has a setting means to set the priority for recording the television broadcast program received with the second receiving means, and when the priority for recording the television broadcast program received with the second receiving means is set with the setting means, the recording currently being performed by the recording means is stopped by the second control means by utilizing the first control means, and after stopping the current recording, the second control means performs recording of the television broadcast program received by the second receiving means and input from the audiovisual signal input means to the recording means.

An embodiment of the invention will now be described, by way of example only, with reference to the accompanying drawings in which:
Fig. 1 is a block diagram showing the structure of an example embodiment of a video recording device;
Fig. 2 is a drawing showing the signal path when performing normal recording in the embodiment of Fig. 1.
Fig. 3 is a drawing showing the signal path when performing priority recording in the embodiment of Fig. 1.

Hereafter, the video recording device of this invention will be described while referring to the accompanying drawings.

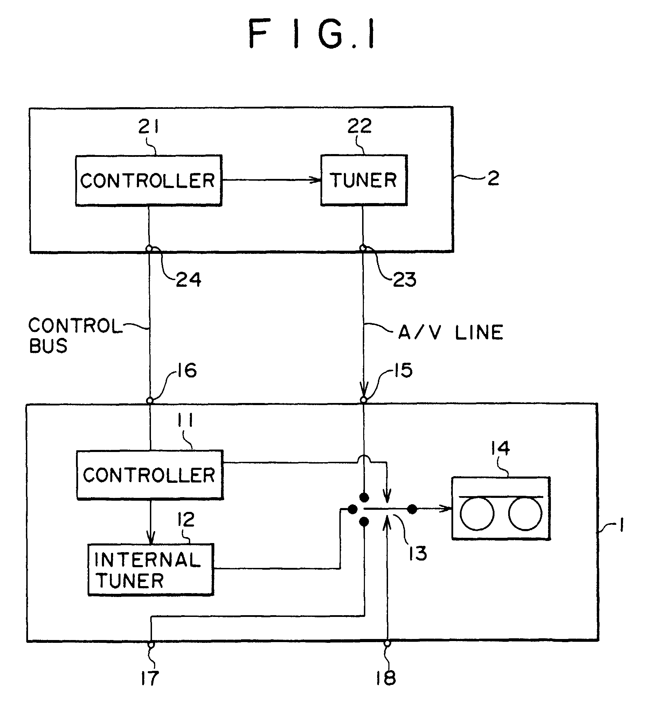

A block diagram showing the structure of the first embodiment of the video recording device of this invention is shown in Fig. 1.

In Fig. 1, the reference numeral 1 denotes a video recorder such as a video cassette recorder, 2 is television receiver, 11 is the controller for the video recorder 1, 12 is the internal tuner of the video recorder 1, 13 is the signal selector switch, 14 is the video record mechanism for the video recorder 1, 15 is the A/V input terminal, 16 is the control signal input terminal, 21 is the controller for the receiver 2, 22 is the tuner for the receiver 2, 23 is the A/V output terminal, 24 is the control signal output terminal. In both the video recorder 1 and the receiver 2, portions in the circuit not directly relating to this invention are omitted from the drawing.

The video recorder 1 has a tuner 12 to receive the broadcast, and can independently select and receive the television broadcast signal with the video record mechanism 14. Further, the controller 11 for the video recorder 1 has a video record scheduling function for video recording of the broadcast program, and can control the internal tuner 12 to independently perform video recording of the pre-selected program.

The video recorder 1 further has an AV input terminal 15 to input audiovisual signals from an external device, and a control signal input terminal 16 to input control signals from an external device. A function is also provided to record the audiovisual signals from the external device according to the control signals from the external device.

The television receiver 2 on the other hand has a tuner 22. This tuner 22 has a controller 21 to control the tuner 22 and external equipment. This controller 11 has a video record scheduling function to record broadcast programs and is capable of controlling the video recording of pre-selected programs. When a request is made for video recording from the television receiver 2, a control signal is sent from the controller 21 and input to the controller 11 of the video recorder 1 by way of the control signal output terminal 24 and the control signal input terminal 16. The controller 11 of the video recorder 1 responds to this control signal and switches the signal selector switch 13 to the A/V input terminal 15 side and the A/V signal is recorded from the television receiver 2 by the video record mechanism 14.

The video recorder 1 is further provided with a second AV input terminal 17 to input audiovisual signals from an external device, and a second control signal input terminal 18 to input control signals from an external device. A function is also provided for priority video recording of audiovisual signals from other external devices according to control signals from other external devices.

Accordingly, in this video recording device, video record scheduling is performed by two methods. In one method, the program scheduling is performed in the controller 11 and when the video recorder 1 itself internally records according to scheduling implemented by the controller 11. In the other method, the program scheduling is performed in the controller 21 on the television receiver 2 side, and the video recorder 1 implements external video recording under external control.

Here, the case where video recording of a program is scheduled at the television receiver 2 side and external video recording performed on the video recorder 1 side is described.

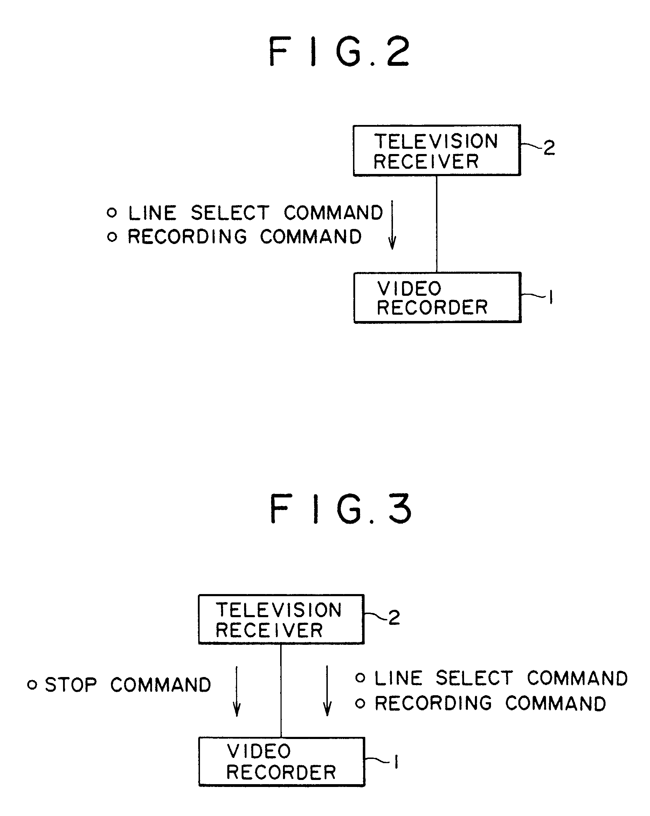

In typical recording as shown in Fig. 2, the television receiver 2 sends a line select command to the video recorder 1 by way of the control signal output terminal 24, and the control signal input terminal 16 directly prior to the start of the program scheduled for recording by the controller 21.

The video recorder 1 ignores this line select command at this time, if video recording is already being performed by way of the internal tuner 12. When video recording is not currently in progress, the controller 11 accepts the line select command and stands by for the next recording command from the television receiver 2. Video recording of the A/V signal from the television receiver 2 input from the A/V input terminal 15 is then performed in accordance with this recording command.

However, when the program received on the television receiver 2 side is for instance a pay television program such as a pay-per-view program and priority recording is necessary, then the controller 21 of the television receiver 2 sends a stop command to the video recorder 1 by way of the control signal output terminal 24, and the control signal input terminal 16 directly prior to the start of recording of the scheduled program. This stop command is accepted at any time, unconditionally in the video recorder 1 and when video recording is already currently being performed by the internal tuner 12, then this recording is temporarily stopped. The controller 21 then sends a line selector command to the video recorder 1 by way of the control signal output terminal 24, and the control signal input terminal 16. At this time, recording in the video recorder 1 has already been stopped by the stop command so this line select command is accepted and video recording of the A/V signal from the television receiver 2 input from the A/V input terminal 15 is then performed in accordance with this next recording command from the television receiver 2.

Thus in this embodiment, when scheduling of priority recording is designated in the controller 21 of the television receiver 2, the video recorder 1 is capable of stopping the recording even if currently in progress when priority recording is designated and then recording the program received by the television receiver 2 so that priority video recording can always be implemented regardless of whether or not recording is currently in progress on the video recorder 1.

In this invention as described above according to claim 1, a video recording device is characterized in having audiovisual signal recording equipment containing a first receiving means to receive television broadcast signals, an audiovisual signal input means to input audiovisual signals from an external source, a selection means to select and output either an audiovisual signal of a television broadcast signal received by said first receiving means or an audiovisual signal input from said audiovisual signal input means, a recording means to record the output of the selection means, a first control means to control the selection by said selection means and the recording by said recording means and, a receiver comprising a second receiving means to receive the television broadcast signal, an audiovisual signal output means to output the audiovisual signal of the television broadcast signal received by said second receiving means to said audiovisual signal input means, a scheduling means for the television broadcast program received by said second receiving means, and a second control means to perform reception in said second recording means of the television broadcast program scheduled with said scheduling means output from said audiovisual signal output means of the audiovisual signal of that television broadcast program, and control in the recording means of the television broadcast program scheduled by the scheduling means through the first control means, wherein said audiovisual signal recording device has a setting means to set the priority for recording the television broadcast program received with said second receiving means, and when the priority for recording the television broadcast program received with said second receiving means is set with said setting means, the recording currently being performed by said recording means is made to stop by said second control means by utilizing said first control means, and after stopping the current recording, said second control means performs recording of the television broadcast program input from said audiovisual signal input means and received by said second receiving means.

Thus an effect of the invention is achieved wherein with a relatively simple configuration, priority video recording can be implemented for audio-video signals from a receive means having priority recording rights, even when video recording of audio video signals is already being performed from the other receive means, and video recording of the required program can be reliably performed.

In this invention as described above according to claim 2, a video recording device is characterized in that said second control means controls sending of a record stop command to said first control means to stop video recording currently being performed by said recording means, and in having an input selection command to control selection by said selection means as well as a record start command to start recording by said recording means.

An effect of the invention is thus obtained wherein at a relatively simple structure and low cost, an exchange of commands between the control means for implementing priority video recording of the audiovisual signal having priority rights can be achieved.

## Claims

1. A video recording device having audiovisual signal recording equipment containing a first receiving means to receive television broadcast signals, an audiovisual signal input means to input audiovisual signals from an external source, a selection means to select and output either an audiovisual signal of a television broadcast signal received by said first receiving means or an audiovisual signal input from said audiovisual signal input means, a recording means to record the output of the selection means, a first control means to control the selection by said selection means and the recording by said recording means and, a receiver comprising a second receiving means to receive the television broadcast signal, an audiovisual signal output means to output the audiovisual signal of the television broadcast signal received by said second receiving means to said audiovisual signal input means, a scheduling means for the television broadcast program received by said second receiving means, and a second control means to perform reception in said second recording means of the television broadcast program scheduled with said scheduling means output from said audiovisual signal output means of the audiovisual signal of that television broadcast program, and control in the recording means of the television broadcast program scheduled by the scheduling means through the first control means, wherein said audiovisual signal recording device has a setting means to set the priority for recording the television broadcast program received with said second receiving means, and when the priority for recording the television broadcast program received with said second receiving means is set with said setting means, the recording currently being performed by said recording means is made to stop by said second control means by utilizing said first control means, and after stopping the current recording, said second control means performs recording of the television broadcast program input from said audiovisual signal input means and received by said second receiving means.

2. An video recording device of claim 1 wherein said second control means controls sending of a record stop command to said first control means to stop video recording currently being performed by said recording means, and an input selection command to control selection by said selection means as well as a record start command to start recording by said recording means.
